(19) Europäisches Patentamt
European Patent Office
Office européen des brevets

(11) **EP 1 860 429 A1**

(12) # EUROPEAN PATENT APPLICATION
published in accordance with Art. 158(3) EPC

(43) Date of publication:
**28.11.2007 Bulletin 2007/48**

(51) Int Cl.:
***G01N 25/16*** (2006.01)  ***G01N 21/19*** (2006.01)
***G01N 21/41*** (2006.01)

(21) Application number: **06713478.3**

(22) Date of filing: **10.02.2006**

(86) International application number:
**PCT/JP2006/302335**

(87) International publication number:
**WO 2006/085606 (17.08.2006 Gazette 2006/33)**

(84) Designated Contracting States:
**DE FR GB IT**

(30) Priority: **10.02.2005 JP 2005033747**
**10.02.2005 JP 2005033879**

(71) Applicants:
• **KANAGAWA ACADEMY OF SCIENCE AND TECHNOLOGY**
**Kawasaki-shi,**
**Kanagawa-ken 213-0012 (JP)**
• **Institute of Microchemical Technology**
**Kawasaki-shi**
**Kanagawa-ken 213-0012 (JP)**
• **The University of Tokyo**
**Bunkyo-Ku,**
**Tokyo 113-8654 (JP)**

(72) Inventors:
• **MAWATARI, Kazuma**
**Kawasaki-shi,**
**Kanagawa 2130012 (JP)**

• **TOKESHI, M.,**
**INSTITUTE OF MICROCHEMICAL TECHNOLOGY**
**Takatsu-ku, Kawasaki-shi, Kanagawa (JP)**
• **KITAMORI, Takehiko c/o school of Engineering**
**Bunkyo-ko, Tokyo 1138654 (JP)**
• **YAMAUCHI, Masayo**
**c/o School of Engineering**
**Bunkyo-ku, Tokyo 1138654 (JP)**
• **HIHARA, Akihide**
**c/o School of Engineering**
**Bunkyo-ku, Tokyo 1138654 (JP)**

(74) Representative: **Bösl, Raphael Konrad**
**Patentanwälte**
**Isenbruck Bösl Hörschler Wichmann Huhn**
**Prinzregentenstrasse 68**
**81675 München (DE)**

(54) **CIRCULAR DICHROIC THERMAL LENS MICROSCOPE**

(57)     An objective of the present invention is to provide a circular dichroism thermal lens microscope apparatus capable of identifying and quantifying optically active samples in ultra-trace amounts, and which has a higher sensitivity than conventional apparatuses.

The objective is achieved by a circular dichroism thermal lens microscope apparatus which beams excitation light and detection light into an optical microscope, where the detection light enters a thermal lens formed by irradiating a sample with the excitation light, and a substance in a sample is detected by determining the diffusion of the detection light by the thermal lens, and where the excitation light is modulated by a phase-modulation element, so as to identify or quantify an optical isomer.

FIG. 1

**EP 1 860 429 A1**

## Description

Technical Field

The present invention relates to a circular dichroism thermal lens microscope apparatus. More particularly, the present invention relates to a circular dichroism thermal lens microscope apparatus which has a high sensitivity and enables measurement of trace amounts of samples in microchannels, by realizing circular dichroism spectroscopy using a thermal lens microscope.

Background Art

Various spectroscopic analysis methods have been used so far for the analysis and measurement of various liquid samples and such, including biological samples. These methods, however, have issues such as samples getting damaged or destroyed, and thus, microscopes for optical range measurement are widely used when handling ultra-trace amounts of samples in solutions, biological tissues, or the like.

Meanwhile, when a highly precise analysis with a high spatial resolution is required, laser fluorescence microscope was practically the only available analytical tool, which naturally limited the subjects of analysis to fluorescent substances. The realization of optical microscopes as an analytical tool with high precision and high spatial resolution, and which were applicable to even non-fluorescent substances was therefore desired.

Optical microscope systems utilizing the thermal lens effect have been considered as analytical tools satisfying such conditions. When utilizing the thermal lens effect, it is essential that detection light is beamed onto the thermal lens formed by excitation light incidence on the sample, and the sample substance is detected by the diffusion of the detection light after passing through the sample. However, realization of such a system has been extremely difficult, since the focal positions of excitation light and detection light coincide with each other in optical microscope systems, due to the sophisticated adjustment of chromatic aberration and such in these systems.

Prior to this application, the present inventors provided, as an analytical tool overcoming such problems, a thermal lens microscope apparatus for ultra-trace amount analysis or the like. This apparatus adopts an optical adjusting device that prevents the focal positions of the excitation light and the detection light from coinciding with each other in the sample by setting excitation light and detection light in different wave lengths and by using as objective lens a lens having chromatic aberration, and a condenser for condensing light passing through the sample, wherein excitation light and detection light entering an ocular lens are radiated on a sample on a sample stage *via* an objective lens, and white the light passing through the sample is condensed by the condenser, analysis is performed only on the detection light in the light passing through the sample (see Patent Document 1).

The thermal lens microscope apparatus for ultra-trace amount analysis according to Patent Document 1 is capable of detecting the concentration of an analyte in a microspace to be analyzed with a high sensitivity. However, it uses a technique of determining the difference in diffusion of the transmitted detection light between when excitation light is irradiated and when not irradiated (that is, the excitation light is intensity-modulated), so as to measure the overall concentration of the entire solute showing light absorption as a thermal lens effect; therefore, under analytical conditions where a plurality of substances having extremely similar physical properties coexist, it was extremely difficult to differentiate the samples from each other for their quantitative detection.

In particular, in the case of a so called optically active sample, the difference in light absorbing properties between optical isomers is extremely small. Thus, it was considered difficult to identify and quantify them by means of a thermal lens microscope apparatus using conventional methods utilizing excitation light.

Meanwhile, as an apparatus for efficiently synthesizing such optically active samples, microchips which perform prompt synthesis of samples on a glass, resin, or silicone with grooves of 1 to 100 $\mu$m have recently been used (see Non-Patent Document 1). The amount of samples synthesized by such apparatuses is extremely small being 1/10,000 or less of the conventional amount of samples. Accordingly, the optical path lengths of analytes are drastically shortened, making the detection increasingly difficult.

Not being limited to when using such microchips, the screening for reaction conditions necessitates investigation of a wide variety of reaction conditions. Thus, needless to say, it is desirable that the amount of samples provided for each analysis be as small as possible.

Furthermore, it is widely known that, depending on their chirality, optically active samples have a significant influence on the physiological actions of living organisms. It is therefore an increasingly important issue in the pharmaceutical field to accurately identify and quantify the chirality of optically active samples.

As a method for determining such optically active samples, circular dichroism measuring apparatuses which perform the determination based on the difference in the absorbance between right-circularly polarized light and left-circularly polarized light (circular dichroism) shown by the substance, and azimuthal polarimeters for determining the rotation (optical rotation angle) of linearly polarized light are known. Circular dichroism measuring apparatuses, in particular, are increasingly indispensable means since they are less susceptible than azimuthal polarimeters to external disturbance factors including temperature changes, dust, air bubbles, and the like.

Specifically, there are known circular dichroism measuring apparatuses comprising a polarized light adjusting means for periodically modulating the state of polarity of light irradiated from light irradiating means and irradiating a sample with the modulated light, and a detecting means for detecting *via* an integrating sphere the diffused reflected light from the sample (see, for example, Patent Document 2).

Also, there are examples of determining optical activity by means of thermal lens measurement where light is not strongly narrowed (see, for example, Non-Patent Document 2).

[Patent Document 1] Japanese Patent Application Kokai Publication No. (JP-A) 2004-45434 (unexamined, published Japanese patent application)
[Patent Document 2] JP-A 2004-325336
[Non-Patent Document 1] "Macromolecular Rapid Communications", No. 25, (2004), pp. 158-168
[Non-Patent Document 2] "ANALYTICAL CHEMISTRY", Vol. 62, No. 22, (1990.11.15) pp. 2467-2471

Disclosure of the Invention

Problems to be Solved by the Invention

In promoting the understanding of physiological functions of living organisms, the significance of the issue of identification and quantification of optically active samples is expected to further increase. However, the detection sensitivity of conventional circular dichroism measuring apparatuses or the like are insufficient and cannot be described as an effective analytical tool for samples containing analytes of a high locality or for samples in ultra-trace amounts.

As to the amount of samples in particular, it is expected that it will be more strictly limited in the near future. It is therefore obvious that, from the perspective of detection sensitivity, circular dichroism measuring apparatuses or the like will not be able to cope with future needs. Furthermore, since these analytical tools are, in the first place, poor in spatial resolution, their application to analytes having a high locality, for example to a specific cell surface, can hardly be expected.

On the other hand, even if the existing thermal lens microscope apparatuses are applied to analytical samples where a plurality of types of optical isomers coexist, due to the extremely small difference between optical isomers in their absorption properties with respect to excitation light ordinarily used in such apparatuses, merely an averaged approximate concentration over a plurality of types of optical isomers can be obtained. In other words, the apparatuses cannot identify which specific type of optical isomer is abundant.

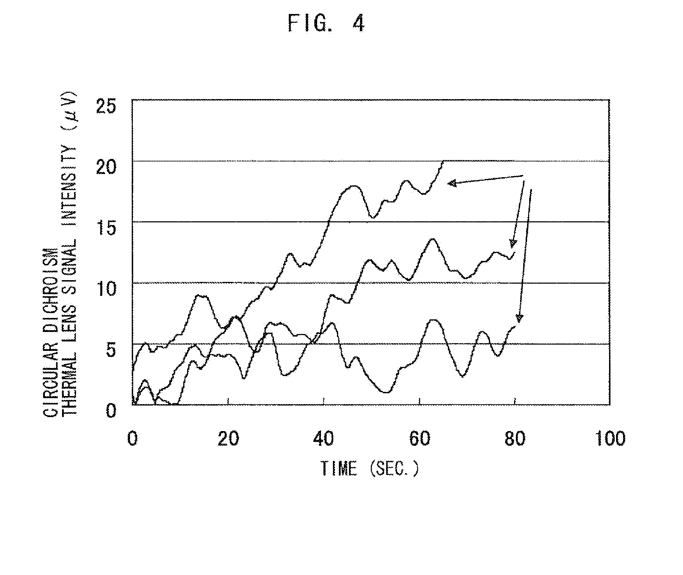

While the method disclosed in Non-Patent Document 2 determined optical activity by thermal lens measurement, this method was not applicable to trace amounts of samples due to its low sensitivity. Furthermore, when the crystal material ADP ($NH_4H_2PO_4$) used in the electrochemical modulation means in this technique is applied to a thermal lens microscope to determine a circular dichroism thermal lens signal, as illustrated in Fig. 4 to be described later, the background signal was unexpectedly high, lowering determination accuracy.

Therefore, a technical problem to be solved by the present invention is how to add the function of identifying optically active samples to conventional thermal lens microscope apparatuses (for which it was difficult to identify optically active samples due to the principle of measurement) and thereby achieve higher sensitivity and higher spatial resolution, so as to make the apparatuses applicable to samples in an ultra-trace amounts, such as those in microchips.

Means for Solving the Problem

The present invention was achieved to solve the aforementioned technical problems in the background art. Because optically active samples contain optical isomers, they have a chiral structure showing an optical rotation opposite to each other, despite being extremely similar in general physicochemical properties. The present inventors arrived at the idea that if it were possible to add a configuration which can regulate the excitation light in a thermal lens microscope to right- or left-circularly polarized light, it will be possible to detect absorption properties with a significant difference between optical isomers by utilizing circular dichroism.

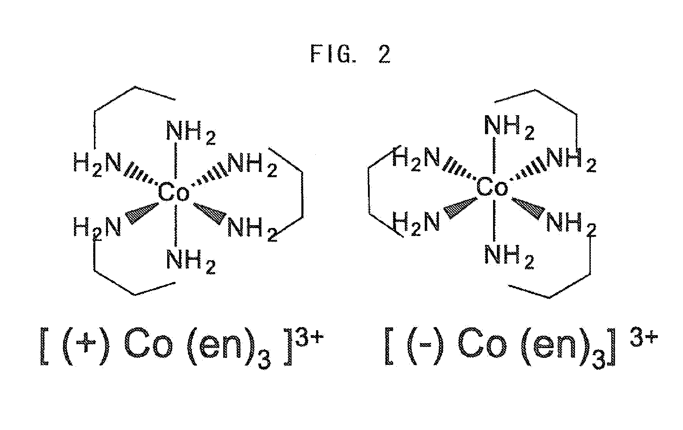

However, merely causing right- and left-circularly polarized light to be introduced as excitation light, as in for example the case of the optical isomer ([(+)Co (en)$_3$]$^{3+}$) illustrated in Fig. 2 to be described later, only yields a difference in the absorbance of the detection light between left-circularly polarized light and right-circularly polarized light ($\Delta\varepsilon_+$(532 nm) $=\varepsilon_L$-$\varepsilon_R$) of +32 x $10^{-1}$ ($M^{-1}cm^{-1}$), and a ratio ($\Delta\varepsilon_+/\varepsilon$ (532 nm)) of only 0.032. Meanwhile, in the case of its optical isomer, ([(-)Co (en)$_3$]$^{3+}$), the difference in absorbance ($\Delta\varepsilon$ (532 nm) = $\varepsilon_L$-$\varepsilon_R$) is -3.2 x $10^{-1}$ ($M^{-1}$ $cm^{-1}$), and the ratio ($\Delta\varepsilon_-/\varepsilon$ (532 nm)) is 0.032. It is thus difficult to simultaneously determine concentration and identity the type of optical isomer with a high precision.

The inventors of the present application succeeded in: the identification of the type of optical isomer by irradiating a sample with excitation light *via* an optical modulation element capable of converting the excitation light between right-circularly polarized light and left-circularly polarized light in a given cycle, thereby imparting periodical changes to the magnitude of the thermal lens effect: detecting the concentration with a high precision by measuring the component which synchronized with the frequency of the light modulation element out of the intensity of detection light passing through the thermal lens region; and identifying the type of optical isomer by phase difference in the periodicity of faint signals.

The present invention (1) is a circular dichroism thermal lens microscope apparatus, which comprises separate oscillation means for emitting excitation light and detection light of different wavelengths which are introduced into a sample *via* an objective lens, wherein changes in the amount of the transmitted detection light caused by a thermal lens formed in the sample using the excitation light is determined as thermal lens signals by placing an optical detector, and wherein the apparatus further comprises a phase-modulation means, which is capable of modulating the excitation light into right- and left-circularly polarized, placed on the excitation light path between the oscillation means and the sample, and identifies and quantifies an optical isomer by determining the difference in the thermal lens signals (circular dichroism thermal lens signals) caused by the irradiation of the right- and left-circularly polarized light.

The present invention (2) is the circular dichroism thermal lens microscope apparatus according to the present invention (1), wherein numerical aperture of the objective lens is 0.1 or greater.

The present invention (3) is the circular dichroism thermal lens microscope apparatus according to the present invention (1) or (2), wherein the phase-modulation means is an electro-optic modulation element.

The present invention (4) is the circular dichroism thermal lens microscope apparatus according to the present invention (3), wherein crystal material of the electro-optic modulation element is formed of any one of the types of materials from the group consisting of KDP ($KH_2PO_4$), DKDP($KD_2PO_2$), and BBO($BaB_2O_4$).

The present invention (5) is the circular dichroism thermal lens microscope apparatus according to the present invention (3) or (4), further comprising a synchronous detection means for extracting from the circular dichroism thermal lens signals a component which synchronizes with the modulation frequency of the electro-optic modulation element, thereby determining the intensity or the phase of the circular dichroism thermal lens signals.

The present invention (6) is the circular dichroism thermal lens microscope apparatus according to the present invention (5), further comprising a means for modulating the intensity of the excitation light for determining the intensity of the thermal lens signals generated by the intensity-modulating means (intensity-modulated thermal lens signals) and the intensity of the circular dichroism thermal lens signals, thereby determining the optical purity of the sample.

The present invention (7) is a circular dichroism thermal lens microscope apparatus, which comprises separate oscillation means for emitting excitation light and detection light of different wavelengths that are introduced into the sample *via* an objective lens for focusing the excitation light in a sample, and which determines the intensity of the detection light passing through the sample, wherein the apparatus further comprises a phase-modulation means, which is capable of selectively modulating only the excitation light into right- and left-circularly polarized light, placed on the excitation light path between the oscillation means and the sample, and a synchronous detection means capable of detecting the intensity of the detection light passing through the sample by synchronizing with the modulation of the phase-modulation means, and determines at least the phase difference of the synchronized component by extracting a component synchronizing with the phase-modulation from the Intensity of the detection light passing through the sample.

The present invention (8) is the circular dichroism thermal lens microscope apparatus according to the present invention (7), further comprising a means capable of modulating the intensity of the excitation light independent from the phase-modulation means, thereby determining the intensity of the detection light passing through the sample when the sample is irradiated with excitation light circularly polarized by the phase-modulation means, and the intensity of the detection light passing through the sample when the sample is irradiated with the excitation light not polarized by the intensity-modulating means, so as to further obtain the ratio of these intensities.

The "phase-modulation element" in the present invention is for imparting right- and left-circular polarization to excitation light. When plane-polarized Light perpendicular to each other and different in phase for 90° are overlapped, they draw spirals and become circularly polarized, where depending on the direction toward which the phase deviates, the direction of the spiral varies between right and left. The term "phase-modulation element" collectively refers to modulation elements for controlling the direction of the circularly polarized light by controlling the phases to be overlapped, and includes "electro-optic modulation elements" and "photoelastic-modulation elements". An example is the Pockels cell utilizing the pockels effect.

The "numerical aperture (N.A.)" indicates a product of the sine of the angle u - the radius of the entrance pupil (diaphragm) forms on an object point - and the absolute refractive index n of the object space n, that is, nsinu. In a microscope, the shortest distance of the two points recognizable to be separate from each other (resolution) is inversely proportional to the numerical aperture. Thus, when the optical system is specified for the selected microscope, limiting the range of the numerical aperture substantially indirectly specifies the transmission length (the thickness of the sample) of analyte samples. The limitation that "the numerical aperture is 0.1 or greater" indicates the exclusion of analytes in a large volume presupposed by the conventional circular dichroism measuring apparatus.

Furthermore, the "optical purity" indicates the excessive amount of one of a pair of enantiomers present in a mixture consisting only of the single pair of the enantiomers, and is expressed in percentage as "% e.e. (enantiomeric excess)" and defined as:

$$e.e. = (C_{(+)}-C_{(-)})/(C_{(+)}-C_{(-)}) \times 100\%$$

which serves as an index of detection sensitivity.

In the present invention, the signal where excitation light is intensity-modulated is called "intensity-modulated thermal lens signal" and the signal where excitation light is phase-modulated is called "circular dichroism thermal lens signal", in order to distinguish them from what is called "thermal lens signal" in a broad sense, indicating the aforementioned changes in the transmitted amount of the detection light.

Brief Description of the Drawings

Fig. 1 is a schematic view illustrating a circular dichroism thermal lens microscope apparatus according to the present invention.
Fig. 2 is a view illustrating the structure of enantiomer used in the Examples of the present invention.
Fig. 3 is a view illustrating an example of a calibration curve of concentration according to Example 1 of the present invention.
Fig. 4 is a reference view showing changes over time of background signal intensities in the circular dichroism thermal lens when ADP ($NH_4H_2PO_4$) is adopted as an electro-optic modulation element.
Fig. 5 is a view illustrating an example of a calibration curve of optical purity according to Example 2 of the present invention.
Fig. 6 is a view illustrating an example showing changes over time of thermal lens signal intensity with respect to the excitation light which is intensity-modulated/phase-modulated according to Example 3 of the present invention.

Explanation of Referenced Numerals

1    excitation light oscillator
2    detection light oscillator
3    phase-modulation element
4    beam splitter
5    microscope
6    mirror
7    objective lens
8    sample
9    lens
10    mirror
11    excitation light cut filter
12    pinhole
13    photodiode
14    lock-in amplifier

Best Mode for Carrying Out the Invention

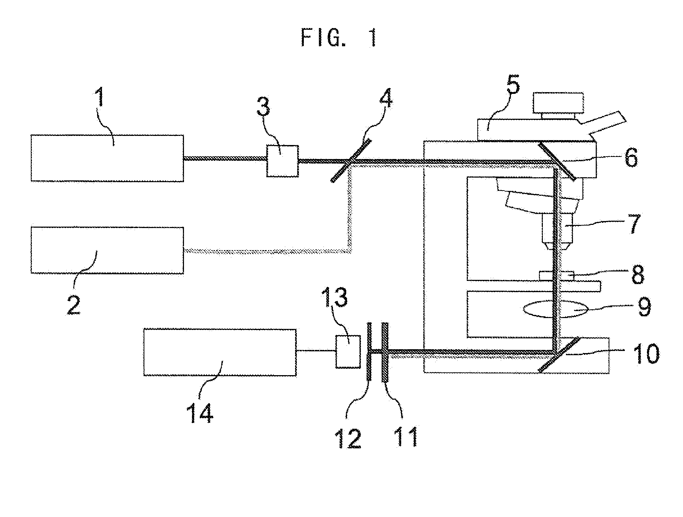

The mode for carrying out the present invention will be described hereinbelow in more detail. Fig. 1 shows an overview of an example of the circular dichroism thermal lens microscope apparatus according to the present invention. In Fig. 1, 1 indicates an excitation light oscillator, which specifically uses a Nd:YAG laser having a wavelength of 532 nm and an output of 100 mW, 2 indicates a detection light oscillator, which specifically uses a He-Ne laser having a wavelength of 633 nm and an output of 15 mW. It is desirable to select wavelengths for these such that the sample absorbs the excitation light, but not the detection light While it is possible to use incoherent optical oscillators which emit white light for the optical oscillators of excitation light and detection light, it is desirable to use laser oscillators which emit monochromatic light and is capable of maintaining a high optical density.

The excitation light emitted from excitation light oscillator 1 is introduced into a phase-modulation element 3 of $DKDP(KD_2PO_2)$ consisting of a Pockels cell, and outputs excitation light which switches to either right-circularly polarized light or left-circularly polarized light at 1 kHz; the output light is then synthesized with the detection light released from the detection light oscillator 2 *via* a beam splitter 4, and the synthesized light is introduced into microscope 5, The lower the modulation frequency, the greater the intensity of the thermal lens signal- that is, the sensitivity is improved. If the modulation frequency is set too low however, the influences of optical noise and electrical noise become relatively greater. Thus, it is desirable to select an optimum frequency so as to make the ratio of signal intensity to noise greater.

The thus synthesized light is emitted on sample 8 *via* an objective lens 7 which is excellent in focal power and adjusted to focus the excitation light within the sample (and *via* mirror 6 which is to be disposed if necessary). While optical systems such as objective lens 7 are excellent in focal power, it is desirable to adopt one having a structure where the focal point of the excitation light and that of the detection light do not coincide with each other. Further, it is not necessarily required to use an objective lens, and a lens excellent in focal power, a combination of lenses (achromatic lens), or the like may be used. Furthermore, although microscope casing is used in this example, any structure may be used as long as the excitation light and probe light are focused within sample 8 *via* a lens excellent in focal power.

Meanwhile, another lens 9 is arranged facing lens 7 so as to have the confocal point therewith. The synthesized light passing through sample 8 is led outside microscope 5 *via* mirror 10. The detection light passing through pinhole 12 is introduced into photodiode 13 to convert the amount of the detection light into an electrical signal, while eliminating the influence of the excitation light by excitation light cut filter 11. The electrical signal is introduced into lock-in amplifier 14. which is an example of synchronous detection means, from which the phase and intensity of the thermal lens signal when the sample is irradiated with the right-circularly polarized excitation light and when irradiated with the left-circularly polarized excitation light are each output as a signal. Each signal constitutes a circular dichroism thermal lens signal, which enables the identification of an optically active sample by the phase indicating the intensity of the absorption of the right- or left-circularly polarized light, and enables quantification of concentration by the intensities. For samples having an optical purity of 100%, the identification and quantification can be directly performed based on the intensity and phase.

It is desirable to configure the circular dichroism thermal lens microscope apparatus such that an optical chopper or the like is interposed in the path of the excitation light so as to enable detection synchronized with the intensity-modulation of the light. In this case, since the excitation light is set on or off, that is intensity-modulated at a certain modulation frequency, no identification of an optically active substance is possible, and the intensity of the intensity-modulated thermal lens signal, which is an output signal of a lock-in amplifier, means the overall concentration of the sample. If the ratio between the intensities of the circular dichroism thermal lens signal and the intensity-modulated thermal lens signal is measured, the excess amount of enantiomers with respect to the total concentration, that is the optical purity, can be inferred. Furthermore, it is possible to identify excessive enantiomers from the phase of the circular dichroism thermal lens signal. In this way, determination of optical purity becomes possible by providing intensity-modulation means such as an optical chopper. For signal processing, since it is only necessary to perform a computation to obtain the ratio at the time of the phase-modulation and at the time of intensity-modulation from the signals of synchronous detection means such as lock-in amplifier, computation is easily done by inputting the data into a personal computer; alternatively, a calculation board may be provided for this purpose.

Furthermore, even if a synchronous detection means is not used, causing excitation light to be right-circularly polarized for a given period, then measuring the output from photodiode 13. further, causing excitation light to be left-circularly polarized for a given period, then, likewise, measuring the output from the photodiode 13, and then if the absolute value and code of the difference in the output signals are measured, a circular dichroism thermal lens signal corresponding to the intensity and phase of the lock-in amplifier, the synchronous detection means, can be obtained, In the case where the intensity is modulated, if the absolute value of the difference in the outputs from photodiode 13 between when the sample is irradiated with the excitation light for a given period and when not irradiated for a given period are likewise measured, a signal corresponding to the intensity of the intensity-modulated thermal lens signal can be obtained. It is possible to calculate an optical purity by a simple computation of determining their ratio in the same manner. In this case as well, a personal computer or a calculation board for this purpose may be used.

When the output of the right-circularly polarized light and the left-circularly polarized light from the phase-modulation means are unstable, it is desirable to take out part of the excitation light outputted from the phase-modulation means by using a beam splitter, or the like, and measure the change in intensity by another photodiode, or the like. It is possible to prevent lowering of the precision in the circular dichroism thermal lens signal derived from the output by measuring the circular dichroism signal and the intensity change simultaneously, and performing correction by a computation operation such as division, or by measuring them separately, inputting them into the memory of a personal computer, or the like and then performing a computation operation.

The circular dichroism thermal lens microscope apparatus according to the present invention is not limited to the above-mentioned composition, and various other optical elements or arrangements adopted in ordinary optical microscope systems may be used, as long as they do not pose an impediment to the detection according to the present invention.

Here, as optically active samples, a pair of enantiomers, $[(+)Co(en)_3]^{3+}$ and $[(-)Co(en)_3]^{3+}$ were used. Their structures are shown in Fig. 2. As mentioned above, in the case of the optical isomer $[(+)Co(en)_3]^{3+}$, the difference in the absorbance between left-circularly polarized light and right-circularly polarized light ($\Delta\varepsilon_+$(532 nm) = $\varepsilon_L$-$\varepsilon_R$) is +3.2 x $10^{-1}$ ($M^{-1}cm^{-1}$). and the ratio ($\Delta\varepsilon_+$/$\varepsilon$ (532 nm)) is only 0.032. Even in the case of its optical isomer, ($[(-)Co(en)3]^{3+}$), the difference in the absorbance ($\Delta\varepsilon_-$(532 nm) = $\varepsilon_L$-$\varepsilon_R$) is -3.2 x $10^{-1}$ ($M^{-1}cm^{-1}$), and the ratio ($\Delta\varepsilon_-$/$\varepsilon$ (532 nm)) is also 0.032.

The values of the isomer having the structure with a [(+)] in Fig. 2, is shown with a "+" and the values of the isomer having the structure with a[(-)] in Fig. 2, is shown with a "-". Absorbance (Abs.) is defined by $\varepsilon$ ($M^{-1}cm^{-1}$) x concentration (M) x optical path length (cm), and the difference in the absorbance between left-circularly polarized light and right-circularly polarized light is $\Delta\varepsilon$ ($M^{-1}cm^{-1}$) x concentration (M) x optical path length (cm).

[Example 1]

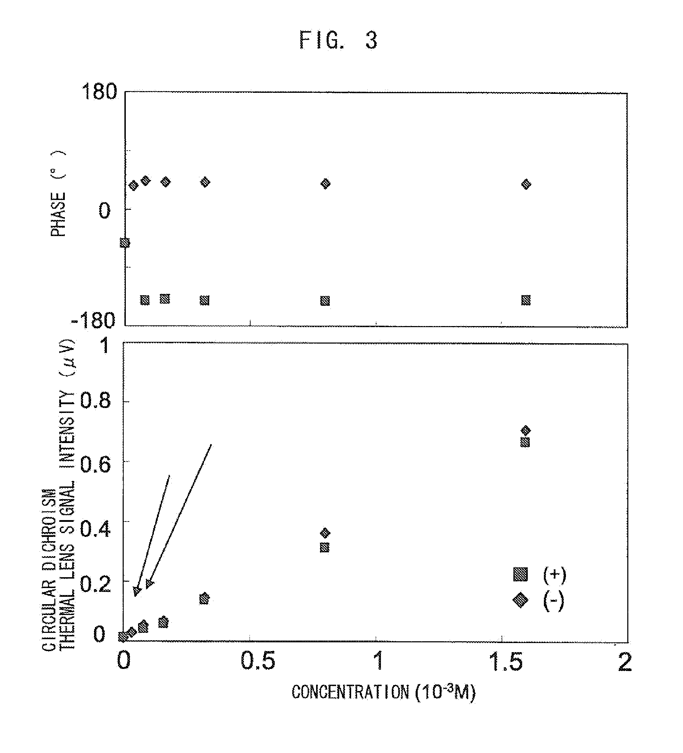

For the pair of enantiomers in Fig. 2. various samples having different concentrations were prepared for each enantiomer (the sample solutions were pooled in microchannels having a depth of 100 $\mu$m). Using the circular dichroism thermal lens microscope apparatus in Fig. 1, the circular dichroism thermal lens signal intensity with respect to the left-circularly polarized light, and the right-circularly polarized light and the phase of the circular dichroism thermal lens signal with respect to the modulation of the excitation light emitted on the sample were measured. The results are summarized in Fig. 3, plotting the concentrations on the horizontal axis.

Upper graph in Fig. 3 shows that the phases are approximately constant over a wide concentration range depending on the type of optical isomer, and that the difference in the two phases are 180°. It is thereby demonstrated that depending on the type thereof, optical isomers have a high absorbance of either left- or right-circularly polarized light, while having a relatively low absorbance of the other circularly polarized light, and that this relationship is reversed between a pair of the optical isomers; that is, the so called circular dichroism is established even in an ultra-trace amount and in extremely restricted space. This evidently supports a wide usability of the circular dichroism thermal lens microscope apparatus. By using the upper graph in Fig. 3, it can be clearly determined which type of optical isomer is contained in a greater quantity than the other in a sample.

The lower graph in Fig. 3 shows that there is a preferable linearity with respect to the concentration that can be used as a calibration curve of concentration. Here, in each of the dots adjacent to the point where the concentration is 0 (excluding the dot on concentration 0), those of (+) are of the sample of $9.4 \times 10^{-5}$M and those of(-) are of the sample of $6.3 \times 10^{-5}$M. Accordingly, the detection limit is estimated as $2.6 \times 10^{-7}$ (Abs.) (= $3.2 \times 10^{-1}$ (=$\Delta\varepsilon$)$\times$ $9.4 \times 10^{-5}$ M x 0.01 cm (the depth of microchannel) x 0. 85 (optical purity)) and $1.9 \times 10^{-7}$ (Abs.) (=$3.2 \times 10^{-1}$ (=$\Delta\varepsilon$) x $6.3 \times 10^{-5}$M x 0.01 cm (the depth of microchannel) x 0.93 (optical purity)), respectively. The values of the optical purities used here are the values obtained by measuring a sufficient amount of samples by a commercially available circular dichroism measuring apparatus.

This detection sensitivity is about two orders of magnitude greater than that of the commercially available circular dichroism measuring apparatus which is said to have a detection limit of around $10^{-5}$ Abs. Therefore, it can be said to be an analytical tool having an extremely highly sensitivity.

Meanwhile, the detection limit of the absorbance in the art using an electro-optic modulation element of ADP ($NH_4H_2PO_4$), as exemplified in Non-Patent Document 2, is merely $1.9 \times 10^{-6}$ CAbs.), which is about one order of magnitude less than the results of this Example.

As a Comparative Example, the results of measurement where ADP ($NH_4H_2PO_4$) was used as an electro-optic modulation element in place of the optical system according to the present invention for measuring an aqueous solution of Sunset Yellow having no circular dichroism as a sample are shown in Fig. 4 (measurements were performed three times). As clear from Fig. 4, the tendency for the background signals to increase over time was observed in every measurement, and their signal level significantly affected measurement precision.

In contrast, when DKDP($KD_2PO_2$) according to the present invention was used as an electro-optic modulation element, the results were stable with the background signals being 1 $\mu$V or less. Furthermore, roughly the same results were obtained when KDP ($KH_2PO_4$) or BBO($BaB_2O_4$) was used in place of DKDP ($KD_2PO_2$).

[Example 2]

Next, a circular dichroism thermal lens microscope apparatus according to the present invention was used for determining optical purity of samples. First, samples were prepared by mixing the two enantiomers in Fig. 2 in various formulation ratios to a total concentration of 16 mM. The thermal lens signal intensities ($\mu$v) and phases (°) of these samples were measured using the circular dichroism thermal lens microscope apparatus according to the present invention.

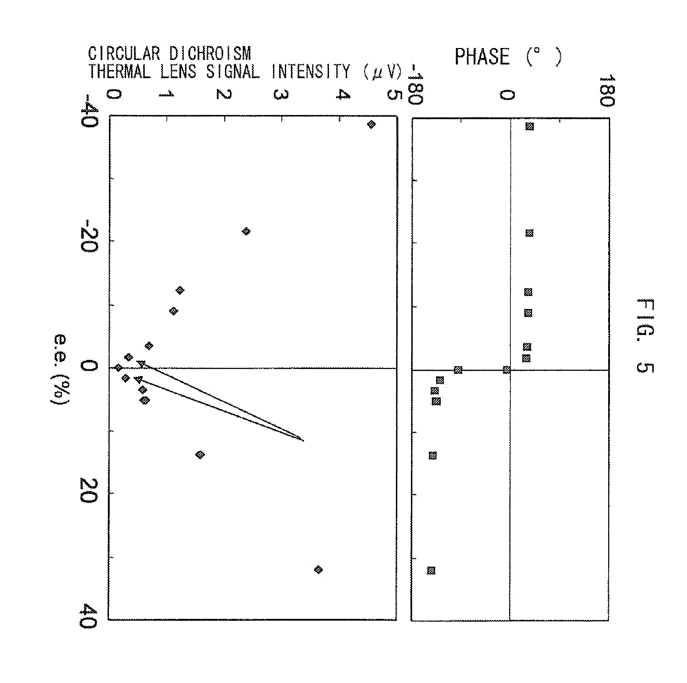

The results are shown in Fig. 5, plotting e.e. (enantiomeric excess (%)= $(C_{(+)}-C_{(-)})/(C_{(+)}-C_{(-)})$ X 100%) on the horizontal axis so as to have the results of the racemic mixture in the center of the graph. The upper graph and the lower graph indicate the results of the phases (°), and the results of the thermal lens signal intensities ($\mu$V), respectively.

As illustrated in the lower graph in Fig. 5. the thermal lens signal intensities show a favorable linearity over a wide range with respect to the optical purity (e.e.), demonstrating that it can be used as a calibration curve of optical purity.

Here, the dots adjacent to the results of the racemic mixture where e.e. = 0% are the dots for the sample where e.e. is "+1.77%" and the samples where e.e. is "-1.65%", It is therefore estimated that the absorbance with respect to (-) = $9.1 \times 10^{-7}$ (Abs.) (= 0.32 x 1.77%/100 x 0.016 M x 0.01 cm) and the absorbance with respect to (+)=$8.5 \times 10^{-7}$ (Abs.) (= 0.32 x 1.65%/100 x 0.016 M x 0.01 cm). The detection sensitivity is about one order of magnitude greater than that of the commercially available circular dichroism measuring apparatus, being around $10^{-5}$ (Abs.). It was thus demonstrated that the apparatus according to the present invention is sufficiently superior for samples comprising a solution mixture of enantiomers.

[Example 3]

Example 2 is a technique that obtains a calibration curve for optical purity beforehand; however other techniques may be used to estimate optical purity. In this Example, a circular dichroism thermal lens microscope apparatus designed to have an intensity-modulation element such as an optical chopper interposed in the path for introducing excitation light so that samples can be directly irradiated with excitation light as it is and not circularly polarized was used.

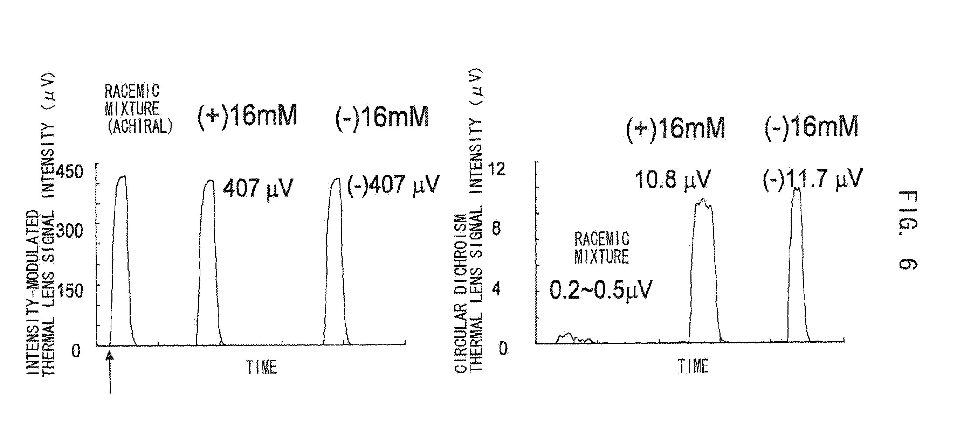

First, a sample of a racemic mixture, a sample with abundant (+) type optical isomers, and a sample with abundant (-) type optical isomers were prepared. The above-mentioned apparatus was applied to these samples. First, samples were irradiated with the excitation light which drives only the intensity-modulation element and not the phase-modulation element. Changes in the intensity of the intensity-modulated thermal lens signal over time after on-off of the excitation light are shown in the left graph in Fig. 6. Here, the excitation light is intensity-modulated at about 1 kHz. On-off of the excitation light indicates irradiation-nonirradialion for a few seconds of the excitation light that is intensity-modulated at about 1 kHz (that is, a long enough time scale with respect to the intensity-moduiation frequency); this on-off *per se* is not intensity-modulation. The same can be said about the phase-modulation. On the other hand, the right graph in Fig. 6 shows changes in the intensity of the thermal lens signal over time when the three samples were each irradiated with excitation light which is either right- or left-circularly polarized by the phase-modulation element which is driven alone this time.

According to the left graph in Fig. 6, the absorbance of the samples as a whole can be estimated since it is excitation light containing components of all directions, and according to the right graph in Fig. 6, the absorbance with respect to circularly polarized light, that is, absorbance attributable to the excess in either of optical isomers can be estimated, and therefore, optical purities can be obtained by the ratio thereof.

In the case of a racemic mixture, regardless of it being irradiated with either right- or left- circularly polarized light, half of the sample shows a relatively high absorbance, causing a certain thermal lens effect, and the thermal lens signal intensity shows a lower value compared with the case where there is an enantiomeric excess.

Here, the value (ΔAbs./Abs.) is called factor g, and represents a value inherent to a substance. This corresponds to (circular dichroism thermal lens signal/intensity-modulated thermal lens signal) in this measurement. Therefore, if factor g obtained by a commercially available circular dichroism measuring apparatus and factor g obtained by the present apparatus agree when the optical purity is 100%, then, since the proportional relationship between e.e. and the circular dichroism thermal lens signal intensity is obtained from the results of Fig. 5. the optical purity can be determined by simple computation according to (circular dichroism thermal lens signal/intensity-modulated thermal lens signal/factor g x 100%). In fact, according to Fig. 6. with sample (+) having an optical purity 100%, factor g is 0.026 (= 10.8 $\mu$V/407 $\mu$V) in this measurement, and with sample (-) having an optical purity 100%, factor g is 0.029 (= 11.7 $\mu$V/407 $\mu$V) in this measurement. On the other hand, when the same samples were measured using a commercially available circular dichroism measuring apparatus, factor g of sample (+) having an optical purity 100% is 0.029 and that of sample (-), 0.032. In this manner, similar values of factor g were obtained. Thus, it became possible to infer an optical purity by a simple computation using a circular dichroism thermal lens signal and an intensity-modulated thermal lens signal. Furthermore, it became possible to infer which enantiomer is excessive according to the phase of the circular dichroism thermal lens signal.

Needless to say, the aforementioned examples can be achieved by measuring the outputs of the lock-in amplifier (intensity and phase) as they are, or by a simple computation to obtain the ratio.

Industrial Applicability

The present invention provides a circular dichroism thermal lens microscope apparatus with a higher sensitivity than conventional apparatuses, and being capable of identifying and quantifying optically active samples. Furthermore, the present invention provides a highly-sensitive circular dichroism thermal lens microscope apparatus for identifying and quantifying optically active samples, which is also applicable to samples in extremely trace amounts such as those in microchannels, and has high spatial resolution. Moreover, the present invention provides a circular dichroism thermal lens microscope apparatus capable of conveniently detecting optical purity with a high sensitivity.

**Claims**

1. A circular dichroism thermal lens microscope apparatus, which comprises separate oscillation means for emitting excitation light and detection light of different wavelengths which are introduced into a sample *via* an objective lens, wherein changes in the amount of the transmitted detection light caused by a thermal lens formed in the sample using said excitation light is determined as thermal lens signals by placing an optical detector, and wherein the apparatus further comprises a phase-modulation means, which is capable of modulating said excitation light into right- and left-circularly polarized light, placed on the excitation light path between said oscillation means and the sample, and identifies and quantifies an optical isomer by determining the difference in thermal lens signals (circular dichroism thermal lens signals) caused by the irradiation of said right- and left-circularly polarized light.

2. The circular dichroism thermal lens microscope apparatus according to claim 1. wherein numerical aperture of the objective lens is 0.1 or greater.

3. The circular dichroism thermal lens microscope apparatus according to claim 1 or 2, wherein the phase-modulation means is an electro-optic modulation element.

4. The circular dichroism thermal lens microscope apparatus according to claim 3. wherein crystal material of the electro-optic modulation element is formed of any one of the types of materials from the group

consisting of KDP(KH$_2$PO$_4$), DKDP(KD$_2$PO$_2$) and BBO(BaB$_2$O$_4$).

5. The circular dichroism thermal lens microscope apparatus according to claim 3 or 4, further comprising a synchronous detection means for extracting from the circular dichroism thermal lens signals a component which synchronizes with the modulation frequency of the electro-optic modulation element, thereby determining the intensity or the phase of the circular dichroism thermal lens signals.

6. The circular dichroism thermal lens microscope apparatus according to claim 5, further comprising a means for modulating intensity of the excitation light for determining the intensity of the thermal lens signals generated by said intensity-modulating means (intensity-modulated thermal lens signals) and the intensity of the circular dichroism thermal lens signals, thereby determining the optical purity of the sample.

7. A circular dichroism thermal lens microscope apparatus, which comprises separate oscillation means for emitting excitation light and detection light of different wavelengths that are introduced into the sample *via* an objective lens for focusing said excitation light in a sample, and which determines the intensity of the detection light passing through the sample, wherein the apparatus further comprises a phase-modulation means, which is capable of selectively modulating only said excitation light into right- and left-circularly polarized light, placed on the excitation light path between said oscillation means and the sample, and a synchronous detection means capable of detecting the intensity of the detection light passing through the sample by synchronizing with the modulation of said phase-modulation means, and determines at least the phase difference of said synchronized component by extracting a component synchronizing with the phase-modulation from the intensity of the detection light passing through the sample.

8. The circular dichroism thermal lens microscope apparatus according to claim 7, further comprising a means capable of modulating the intensity of the excitation fight independent from the phase-modulation means, thereby determining the intensity of the detection light passing through the sample when the sample is irradiated with excitation light circularly polarized by the phase-modulation means, and the intensity of the detection light passing through the sample when the sample is irradiated with the excitation light not polarized by the intensity-modulating means, so as to further obtain the ratio of these intensities.

FIG. 1

FIG. 2

$[\,(+)\,Co\,(en)_3\,]^{3+}$     $[\,(-)\,Co\,(en)_3\,]^{3+}$

FIG. 3

FIG. 4

FIG. 5

FIG. 6

| **INTERNATIONAL SEARCH REPORT** | International application No. |
|---|---|
| | PCT/JP2006/302335 |

A. CLASSIFICATION OF SUBJECT MATTER
*G01N25/16*(2006.01), *G01N21/19*(2006.01), *G01N21/41*(2006.01)

According to International Patent Classification (IPC) or to both national classification and IPC

B. FIELDS SEARCHED

Minimum documentation searched (classification system followed by classification symbols)
*G01N25/16*(2006.01), *G01N21/19*(2006.01), *G01N21/41*(2006.01)

Documentation searched other than minimum documentation to the extent that such documents are included in the fields searched
Jitsuyo Shinan Koho    1922-1996  Jitsuyo Shinan Toroku Koho  1996-2006
Kokai Jitsuyo Shinan Koho  1971-2006  Toroku Jitsuyo Shinan Koho  1994-2006

Electronic data base consulted during the international search (name of data base and, where practicable, search terms used)
JST7580(JDreamII), JSTPlus(JDreamII)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | Guillermo Ramis-Ramos, Analytical character istics, applications and perspectives in thermal lens spectrometry, ANALYTICA CHIMICA ACTA, Vol.283, No.1, 15 November, 1993 (15. 11.93), pages 623 to 634 | 1-3,5,7<br>4<br>6,8 |
| X<br>Y<br>A | Minren Xu and Chieu D. Tran, Thermal lens-circular dichroism detector for high-performance liquid chromatography, Analytical Chemistry, Vol.62, No.22, 15 November, 1990 (15.11.90), pages 2467 to 2471 | 1-3,5,7<br>4<br>6,8 |
| X<br>Y<br>A | Minren Xu and Chieu D. Tran, Thermal lens-circular dichroism spectropolarimeter, Applied Spectoroscopy, Vol.44, No.6, 1990.07, pages 962 to 966 | 1-2,5,7<br>3,4<br>6,8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>02 May, 2006 (02.05.06) | Date of mailing of the international search report<br>16 May, 2006 (16.05.06) |
|---|---|
| Name and mailing address of the ISA/<br>Japanese Patent Office | Authorized officer |
| Facsimile No. | Telephone No. |

Form PCT/ISA/210 (second sheet) (April 2005)

## INTERNATIONAL SEARCH REPORT

| International application No. |
|---|
| PCT/JP2006/302335 |

C (Continuation).  DOCUMENTS CONSIDERED TO BE RELEVANT

| Category* | Citation of document, with indication, where appropriate, of the relevant passages | Relevant to claim No. |
|---|---|---|
| X<br>Y<br>A | Chieu D. Tran and Minren Xu, Ultrasensitive thermal lens-circular dichroism spectropolari meter for small-volume samples, Review of Scientific Instruments, Vol.60, No.10, 1989.10, pages 3207 to 3211 | 1-2,5,7<br>3,4<br>6,8 |
| Y | JP 2004-317646 A  (Japan Science and Technology Agency),<br>11 November, 2004 (11.11.04),<br>Par. No. [0044]<br>(Family: none) | 4 |
| Y | JP 2003-31814 A  (Semiconductor Energy Laboratory Co., Ltd.),<br>31 January, 2003 (31.01.03),<br>Par. No. [0056]<br>& US 2002/0132383 A1   & CN 1375859 A | 4 |
| Y | JP 3612557 B2  (National Institute of Information and Communications Technology),<br>05 November, 2004 (05.11.04),<br>Par. No. [0038]<br>(Family: none) | 4 |
| A | WO 03/029790 A1  (HIGH-THROUGHPUT CHIRAL DETECTOR AND METHODS FOR USING SAME),<br>10 April, 2003 (10.04.03),<br>Full text; all drawings<br>& JP 2005-524052 A     & US 2005/0094144 A1<br>& EP 1436594 A | 1-8 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004045434 A

- JP 2004325336 A

**Non-patent literature cited in the description**

- *Macromolecular Rapid Communications,* 2004, (25), 158-168

- *ANALYTICAL CHEMISTRY,* 15 November 1990, vol. 62 (22), 2467-2471